# EUROPEAN PATENT APPLICATION

(11) **EP 2 332 449 A1**
(43) Date of publication of application: **15.06.2011**
(21) Application number: 09178816.6
(22) Date of filing: 11.12.2009
(51) Int. Cl.: A47J 31/40, B67D 1/00

(54) **Multi-way mixing valve, device for preparing beverages containing such valve and an instantaneous heating device for use therewith**

(71) Applicant: Selko Industries Sp. z o.o., 00-762 Warszawa (PL)
(72) Inventor: Koradecki, Dariusz, 00-762, Warszawa (PL)

(57) **Abstract**

Multi-way mixing valve containing a valve body (1) and a selector (2), both rotably mounted on one common axis (X), a central channel (1a) extending within the body (1) along the said axis (X), supplying an incoming stream (A) of a primary liquid, the body (1) containing further at least two nozzles (9) each of which supplies one other incoming stream of a different liquid (B, C, ...), the stream of the primary liquid (A) mixing inside the valve body (1) with one stream of the other liquid (B, C, ...), the valve body (1) comprising at least two radial cylinders (1b) extending transversely with respect to the axis of the valve body, the top part of each cylinder enabling liquid communication with one of the said nozzles (9) and the lower part thereof being provided with a dispensing opening

Device for preparation of beverages comprising a multi-way mixing valve according to the invention and an instantaneous heating device for use in such device and valve.

## Description

The invention concerns the domain of the valves which are commonly used in automatic beverage devices enabling preparation of beverages selected by a user.

Industrially produced extracts of popular beverages e.g. coffee or tea may be served when diluted with hot or cold water. The process itself is very simple, the extract being produced by industrial thickening of a beverage in order to obtain a homogeneous liquid, which may be diluted back with water into the original beverage. This kind of process is widely applied in food industry, in particular for producing popular bottled beverages. Extracts are also used for preparation of beverages ready for immediate consumption, however the automatic dispensers used for this purpose are usually strictly professional devices that are distributed and chain serviced by the beverage extract distributors. Dispensers that are available to individual consumers are rare and enable preparation of beverages from the extracts confectioned in 1 gallon BagInBox system bags packed in stiff cardboard boxes. This system is dedicated mainly to professional catering applications, hence the dispensers are far too heavy and expensive for popular consumer use.

The above described automatic dispensers contain complex mixing devices with a complicated structure of multiple connectors for all the incoming streams as well as an equally complex user accessible manipulation system for controlling the incoming streams by the user. The internal structure of such standard beverage dispensers is complicated and requires an additional external casing as a support, carrying also the external control panels.

The aim of the invention is a simplified multi-way mixing valve for use in automatic beverage devices, optionally equipped with an, instantaneous heating device. The valve according to the invention provides all the basic functions of a machine for beverages preparation. However, it does not require the separate casing and consequently there is no need for designing the external control panels that are located thereon in the known machines.

The multi-way mixing valve according to the invention contains a valve body and a selector, both rotably mounted on one common axis, a central channel extending within the body along the said axis, supplying an incoming stream of a primary liquid, the body containing further at least two nozzles each of which supplies one other incoming stream of a different liquid, the stream of the primary liquid mixing inside the valve body with one stream of the other liquid. The valve body comprises at least two radial cylinders extending transversely with respect to the axis of the valve body, the top part of each cylinder enabling liquid communication with one of the said nozzles and the lower part thereof being provided with a dispensing opening. Each cylinder contains a piston sliding therein having a tubular-conical shape. The selector is provided with a driving means for controlling the piston located in the cylinder selected by means of the selector in order to establish liquid communication of the selected cylinder with its associated nozzle supplying the stream of the other liquid, with the axial channel supplying the incoming stream of the primary liquid and with the dispensing opening of the selected cylinder as well as the dispensing opening located in the selector.

The piston driving means is preferably a lever which is mechanically connected with the selector.

Preferably, the piston is mounted in the cylinder on a rigid push rod and is biased in the direction of the valve axis by a spring means abutting against the inner wall of the sleeve surrounding the valve body.

The valve preferably comprises six cylinders each of them containing a piston sliding therein having a tubular-conical shape and six associated supplying nozzles, the cylinders and the supplying nozzles being symmetrically arranged around the vertical valve body axis.

The selector is preferably ring shaped.

Another object of the invention is an instantaneous heating device comprising a heating element receiving a stream of the liquid flowing over it for being heated and a rotary sweeper, the sweeper being operatively pressed against the surface of the heating element during its rotary movement over the heating element and forcing the liquid being heated to shift on the said surface.

Preferably, the sweeper is driven by a step motor and pressed against the surface of the heating element by means of a spring clamp connected to the motor casing.

The heating element preferably comprises a graphite heater on a ceramic base and the sweeper preferably comprises Teflon.

In an advantageous embodiment, the heating element is slightly sloped in relation to the horizontal direction enabling the liquid being heated to flow down its surface by gravity.

Preferably, the valve according to the invention further comprises the instantaneous heating device of the invention for heating the outgoing stream of beverage, most preferably the instantaneous heating device is mounted below the selector dispensing opening.

Another object of the invention is a device for preparation of beverages basing on a primary liquid which is mixed with one other liquid selected from a group of at least two liquids, comprising means for supplying the primary liquid and a rotary holder for at least two containers each containing a different liquid.

The device for preparation of beverages is **characterized in that** it comprises the multi-way mixing valve according to the invention.

Preferably, the device is provided with a stand means, a water tank and means for water supply connection. The at least two liquid containers are preferably equipped with automatic valves enabling self snap-engagement in an open position of the container on a nozzle as well as self snap-disengagement thereof in a closed position.

The main advantageous feature of the valve according to the invention its functionality enabling selection by a user of the outgoing beverage contents from among several different liquids (incoming streams) with the use of a one individual compact device, the structure of which is very simple while mechanically resistant and easy to operate in order to select the required contents of a beverage that is dispensed in the form of the outgoing stream. The invention opens new possibilities in the domain of automatic devices for preparation of beverages selected by a user. The very simple construction, the limited number of potentially durable components and the obvious intuitive operation of the selector by way of adjusting of the rotable body equipped with visible various liquid containers over the piston driving means, constitute a novel and inventive concept. In fact, the simple inexpensive reliable and easy to handle beverage dispensing system may be applied in any automatic beverage preparation procedure based on liquid extracts, which is meant to be easy and ready to use.

### Short description of the drawings

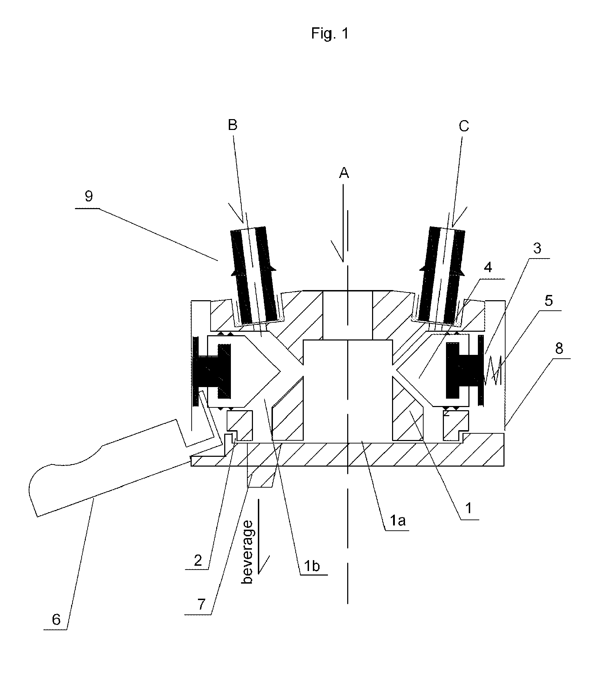

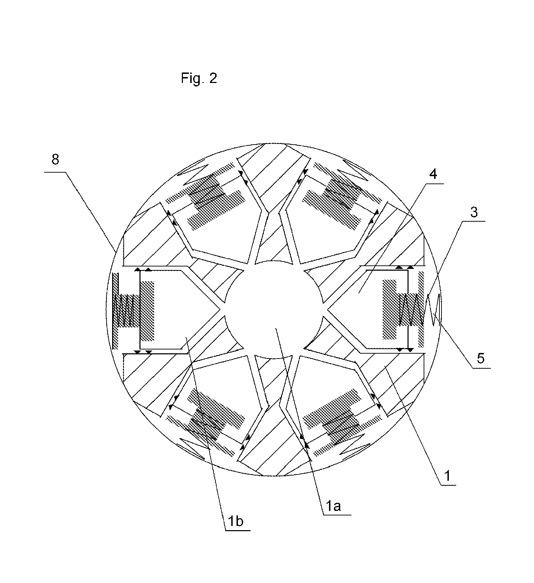

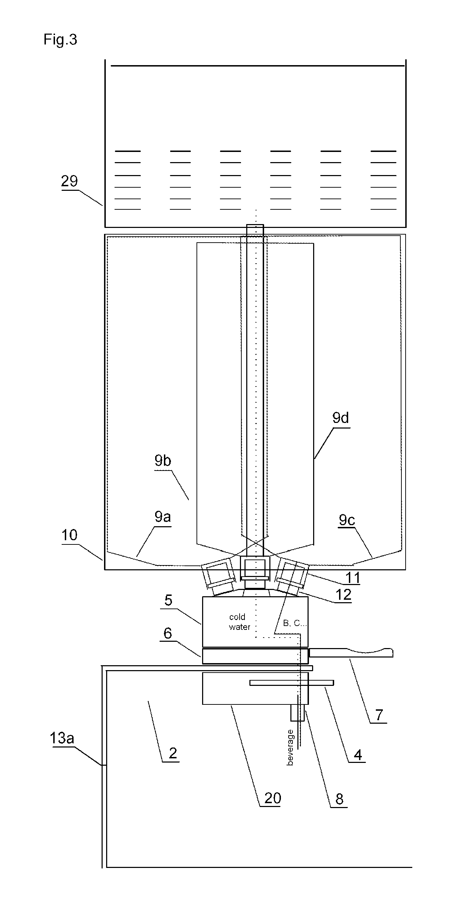

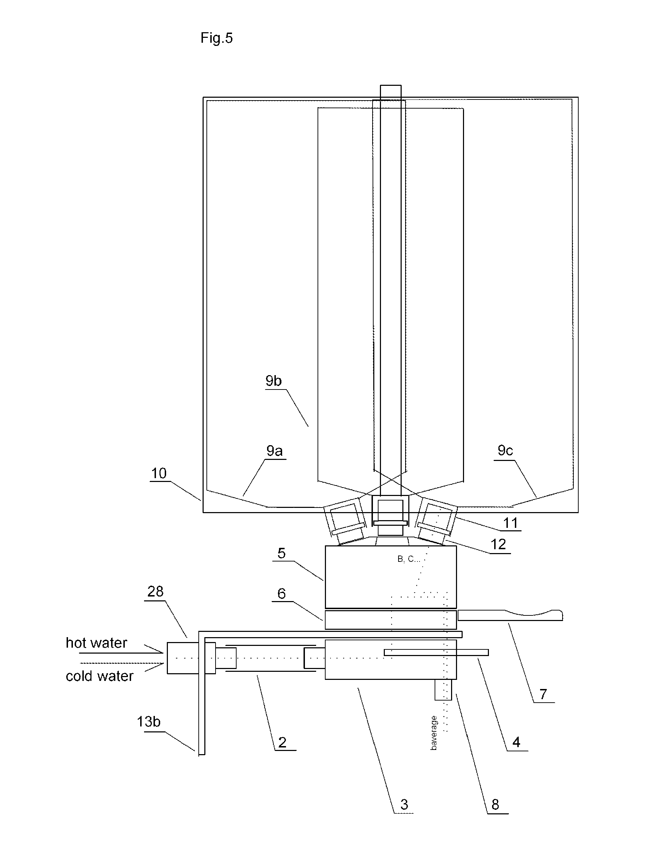

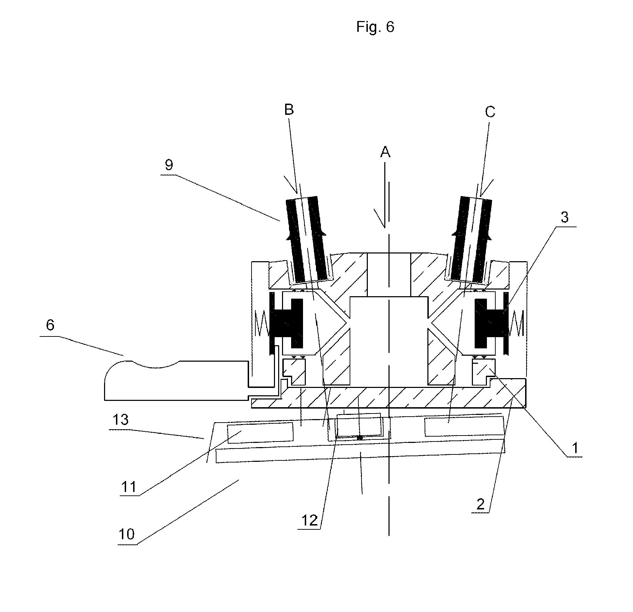

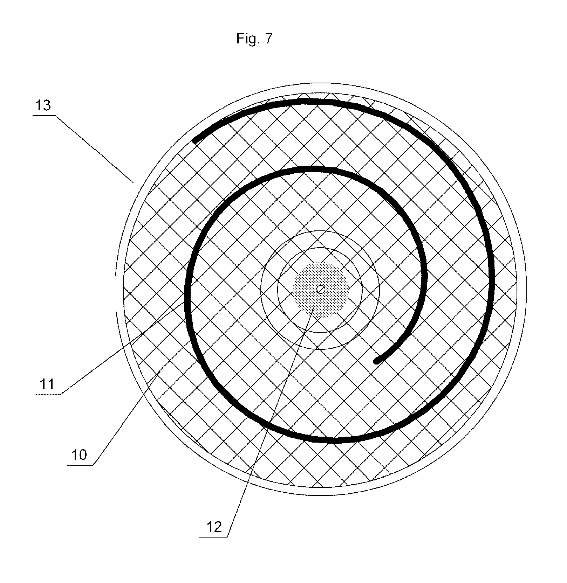

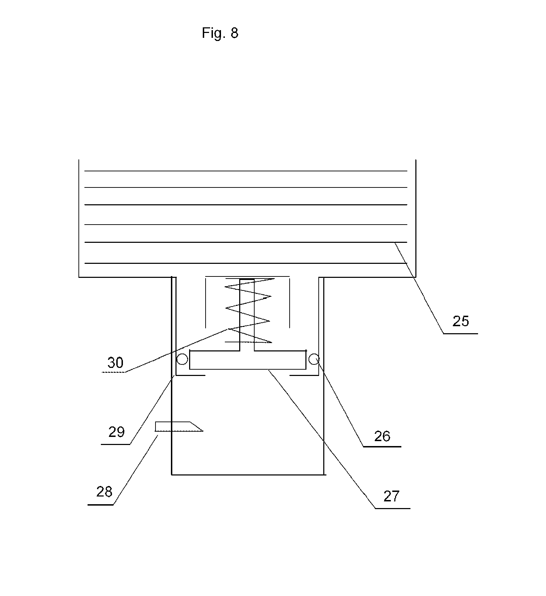

The non-limiting exemplary embodiments of the invention are illustrated on the appended drawings, on which: fig. 1 is an axial cross-section of the valve according to the invention; fig. 2 is a cross-section of the valve according to the invention along the plane I-I; fig. 3 is a schematic axial cross-section of the device for preparation of beverages according to the invention; fig. 5 is a cross-section of the device for preparation of beverages according to the invention along the plane II-II; fig. 5 is a schematic axial cross-section of another embodiment of the device for preparation of beverages according to the invention; fig. 6 is an axial cross-section of the valve according to the invention equipped with a heating device according to the invention; fig. 7 is a view from above of instantaneous heating device according to the invention; fig. 8 is a cross-section of the heating device according to the invention along the plane A-A shown on fig. 7; fig. 9 is a cross-section of a standard snap-engagement valve closing a foil extract container.

### Detailed description of the drawings

The valve represented on fig. 1 and fig. 2 comprises a one-piece body 1 enclosed by a sleeve 8. A central channel 1a is formed in the body 1, supplying the incoming stream of the primary liquid A, being the main component of the mixture e.g. a solvent like water or water solution of ethanol. The body further comprises the radial, transversely extending cylinders 1b the hydraulic communication of which with the central channel 1a is controlled by the elastic e.g. silicon tubular-conical shape pistons 4 that are mounted on their push rods 3 and biased in the direction of the valve axis by a spring means 5 abutting against the inner wall of the sleeve 8 made of a thin-wall stainless steel tube. On top of each cylinder 1b and associated nozzle 9 is mounted for supplying one other incoming stream of a different liquid B, e.g. a coffee or tea extract etc. Each nozzle may supply a different liquid, meaning and extract of a different beverage.

The body 1 and the pistons 4 are rotably connected with the selector 2, here a ring shaped selector, supporting a driving means 6, being preferably a mechanical lever opening the flow of the streams A and B through the valve. Both streams are mixed inside the valve before flowing out through the selector dispensing opening 7.

The valve according to the invention is operated by the user who first adjusts a position of the body 1 by rotating it in relation to the selector 2, the extract containers with its associated nozzles 9 being visible to the user who is able therefore to easily select the proper position. The rotation of the body 1 in relation to the selector 2 causes engagement of the lever 6 with a push rod 3 of a piston 4 sliding in the respective cylinder 1b; the body is rotated until the cylinder connected through its nozzle 9 to the desired beverage component is reached.

Upon adjusting the position the body 1 the user pushes the lever 6 causing the tubular-conical shape piston 4 to slide in the direction from the valve axis and in consequence to open the inflow of the selected stream of the liquid B (selected beverage component) as well as the inflow of the stream of the liquid A (primary beverage component) through the central channel 1b into the associated cylinder. At the same time, the retracted piston 4 opens the outlet opening located at the bottom of the cylinder leading to the dispensing opening 7 formed in the selector 2. It should be noted that the complete flow paths of the incoming components B inside the multi-way mixing valve according to the invention are separated from each other which guarantees that no prior component contamination of the mixture flowing currently through a selected path may occur. On the other hand, thanks to the axial symmetry of the whole device, the outlet openings of the respective cylinders, when set in liquid communication with the dispensing opening 7, will be aligned in the same position with respect to the user, irrespective of the angle of rotation of the body 1 with relation to the selector 2 and the driving means 6. Therefore, the location of the dispensing opening 7 is always the same which simplifies operation of the valve.

The device for preparation of beverages according to the invention, presented on fig. 3 and fig. 4 constitutes an inexpensive, modular consumer-use system, enabling easy selection of one of e.g. six types of extracts from self-closing and snap-engageable bags contained inside the device in order to prepare the beverage of a desired temperature. In addition to the multi-way mixing valve, the device for preparation of beverages comprises a rotary container 20 for the extract bags e.g. 21a-f, closed by standard automatic valves 22 as illustrated in detail on fig. 9, a support 13a and a water tank 29.

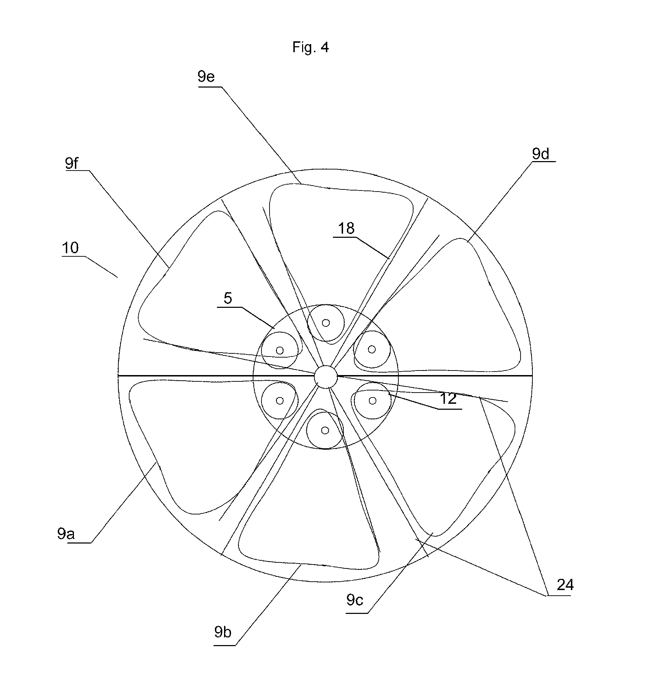

The multi-way mixing valve according to the invention is a main bearing part of the device connecting its other elements, i.e. the rotary container 20 for the extract bags e.g. 21a-f, the support 13a and the water tank 29. The valve is axially symmetrical and has the nozzles 9 mounted on its upper surface and facing upward. The extract bags e.g. 21a-f, provided with the automatic valves 22 are connected to the nozzles. Fig. 3 and fig. 4 show an exemplary device according to the invention equipped with a container receiving 6 bags 21a-f but it should be understood that a container for just two or any other number of bags is envisageable. The number of bags is only limited by the possible number of cylinders 1b and their respective equipment that may be packed in the valve body 1.

Fig. 5 shows an alternative device for preparation of beverages, provided with a mounting assembly 23b with standard hot and cold water-supply connectors 28, cooperating with a standard gallon water dispenser or a catering water boiler. The rotary and axially symmetrical bags container 20 is rotable around the valve axis. A rotation by an angle resulting from the number of the associated bags, e.g. 6 causes the engagement, through a nozzle 9 mounted on the valve, of a respective bag containing a liquid B (mixture component or beverage extract) with the driving means 6 of the multi-way mixing valve, here the lever. In consequence, the beverage obtained by dilution of the extract in the stream of cold of hot water, is being dispensed through the dispensing opening 27. As during the operation of the device, the lever 6 is preferably located on the front thereof, the user may easily and intuitively select the beverage by rotating the container 20, preferably made of a transparent material, until the selected extract in a bag 21a-7 is placed in the front and above the lever 6. Then, the lever 6 should be pressed during a time necessary to pour the required amount of the beverage.

The selection of the liquid B (mixture components) by way of rotating the valve body 1 in relation to the selector 2 and placing the container with the selected component above the fixed lever 6 opening the valve is easy and intuitive. One-piece construction of the valve allows for reducing the overall size of the whole device and consequently for shortening by orders of magnitude the flow paths of the incoming and outgoing streams when compared to the state of art devices. On the other hand, the associated additional equipment and accessories like e.g. the extract containers, the instantaneous heating device or the tray supporting the receptacle receiving the prepared liquid, may be supported on a solid valve body according to the invention. This in turn enables dispensing with the casing that in the known devices serves as a support for the associated additional equipment and accessories. Therefore, placement of additional device driving means on the casing for the user's convenience is also omitted. From the point of view of the durability and reliability of the device, the above mentioned shortening of the flow paths of the liquids B (incoming streams) is particularly advantageous. The said flow paths are inevitably susceptible to contamination by dried remains of substances. In the case of the valve according to the invention, these are just single millimeters within the nozzles 9 supplying the extract to the cylinder 1b, the inside of which, as well as the dispensing opening, is readily accessible for the user upon unscrewing of the nozzle. The user can therefore easily remove any possible contamination without demounting the casing, which in the device of the invention is not necessary.

Fig. 6 shows an axial cross-section of the valve according to the invention equipped with a heating device according to the invention, fig. 7 shows a view from above of instantaneous heating device according to the invention and fig. 8 is a cross-section thereof. The instantaneous heating device is mounted to the selector 2 consisting of a ring, in this case a fixed ring, the rotary element being the valve body 1. The heating device comprises a standard flat heating element 10, e.g. a graphite heater on a ceramic plate, slightly sloped and enabling the beverage consisting of the mixture of the liquid A and liquid B to flow down its surface by gravity. A characterizing feature of the heating device is the sweeper 11, in this embodiment consisting of a spiral shaped Teflon rotary element driven by the step motor 12 and pressed towards the ceramic plate 10 by a spring clamp 13 engaged to the step motor casing. The described device enforces dislocation of the mixture over the surface of the heating plate 10 and causes immediate return of any appearing deposits back to the mixture. This in turn prevents the deposits of the boiling mixture from remaining on the plate and being burnt on its surface.

In order for the instantaneous heating device to operate properly, the selection of the following operating parameters of the rotary sweeper and the heater is essential:
- heating power surface density, calculated as the average heat energy transferred to the heated liquid layer per unit of the heating element surface;
- liquid layer thickness measured between the bottom surface 31 of the sweeper 11 and heating element surface;
- rotational speed of the sweeper 11.

The Teflon sweeper axially pressed towards the heater surface will coat it with a thin layer of Teflon from the start of operation. Therefore, heat transfer parameters for Teflon and the liquid being heated as well as its specific heat capacity and vaporization heat should be taken into consideration in the calculations. In practice standard values for water can be used irrespective of the type of the actual extract used because typical dilutions of the popular beverages are of the order of several ppm, the extract itself being a water solution or suspension.

For example, for a 1 mm thick layer of the liquid located between the lower surface 31 of the sweeper 11 and the surface of the heater, and the power density amounting to 25 W/sq.cm, the warming of the layer of the liquid from the room temperature of 20 °C to 100 °C would take approx 1,5 s. In the case of a helical sweeper 11, the layer of the liquid would stay on the surface of the heater through one turn of the sweeper, so the adequate rotation speed would be 40 rpm. The average water vaporization heat at 60° C amounting to 2359 kJ/kg allows to disregard the heat loses caused by vaporization for such short periods, while the sealed contact between the edge of the sweeper and the heater as well as the relatively small outlet opening 32, will not allow for the liquid to come into boiling within the whole layer of the liquid.

The described solution of the heating device allows to adjust the outgoing stream temperature irrespective of the user's selection of the incoming components and is optimal from the point of view of energy saving. The heat is transferred to the last length of the flow path of the liquid flowing through the multi-way valve upstream the beverage receiving receptacle, which excludes the heat losses within the device occurring if e.g. the water is being heated in the incoming stream.

The described multi-way valve according to the invention may constitute a base for a whole group of completely innovative solutions for use in the devices for preparation of beverages basing on extracts.

## Claims

1. Multi-way mixing valve containing a valve body (1) and a selector (2), both rotably mounted on one common axis (X), a central channel (1a) extending within the body (1) along the said axis (X), supplying an incoming stream (A) of a primary liquid, the body (1) containing further at least two nozzles (9) each of which supplies one other incoming stream of a different liquid (B, C, ...), the stream of the primary liquid (A) mixing inside the valve body (1) with one stream of the other liquid (B, C, ...), the valve body (1) comprising at least two radial cylinders (1b) extending transversely with respect to the axis of the valve body, the top part of each cylinder enabling liquid communication with one of the said nozzles (9) and the lower part thereof being provided with a dispensing opening, each cylinder (1b) containing a piston (4) sliding therein having a tubular-conical shape, the selector(2) being provided with a driving means (6) for controlling the piston (4) located in the cylinder (1b) selected by means of the selector (2) in order to establish liquid communication of the selected cylinder (1b) with its associated nozzle (9) supplying the stream of the other liquid (B, C, ...), with the axial channel (1a) supplying the incoming stream of the primary liquid (A) and with the outlet opening of the selected cylinder as well as the dispensing opening (7) located in the selector.

2. The valve according to claim 1, **characterized in that** the piston driving means (6) is preferably a lever mechanically connected with the selector (2).

3. The valve according to claim 1 or 2, **characterized in that** the piston (4) is mounted in the cylinder (1b) on a rigid push rod (3) and is biased in the direction of the valve axis by a spring means (5) abutting against the inner wall of the sleeve (8) surrounding the valve body (1).

4. The valve according to claim 1, **characterized in that** it comprises six cylinders (1b) each of them containing a piston (4) sliding therein having a tubular-conical shape and six associated supplying nozzles (9), the cylinders and the supplying nozzles being symmetrically arranged around the vertical valve body axis (X).

5. The valve according to claim 1, **characterized in that** the selector (2) is ring shaped.

6. Instantaneous heating device comprising a heating element (10) receiving a stream of the liquid flowing over it for being heated and a rotary sweeper (11), the sweeper being operatively pressed against the surface of the heating element (10) during its rotary movement over the heating element and forcing the liquid being heated to shift on the said surface.

7. The instantaneous heating device according to claim 6, **characterized in that** the sweeper (11) is driven by a step motor (12) and pressed against the surface of the heating element (10) by means of a spring clamp (13) connected to the motor casing.

8. The instantaneous heating device according to claim 6 or 7, **characterized in that** the heating element (10) comprises a graphite heater on a ceramic base and the sweeper (11) preferably comprises Teflon.

9. The instantaneous heating device according to any of claims 6-8, **characterized in that** the heating element (10) is slightly sloped in relation to the horizontal direction enabling the liquid being heated to flow down its surface by gravity.

10. The valve according to any of claims 1-5, **characterized in that** it further comprises the instantaneous heating device of the invention for heating the outgoing stream of beverage according to any of claims 6-9.

11. The valve according to claim 10, **characterized in that** the instantaneous heating device is mounted below the selector dispensing opening (7).

12. Device for preparation of beverages basing on a primary liquid (A) which is mixed with one other liquid selected from a group of at least two liquids (B, C, ...), comprising means for supplying the primary liquid (A) and a rotary holder (20) for at least two containers (21a, 21b, ...) each containing a different liquid (B, C, ...), **characterized in that** it comprises the multi-way mixing valve according to claims 1-5 or 10-11.

13. The device according to claim 12, **characterized in that** it is provided with a stand means (23a), a water tank (29) and preferably means for water supply connection, the at least to liquid containers (21a, 21b, ...) being preferably equipped with automatic valves (22) enabling self snap-engagement in an open position of the container on a nozzle (9) as well as self snap-disengagement thereof in a closed position.
